# FASCICULE DE BREVET EUROPEEN

(11) **EP 3 274 103 B1**
(45) Date de publication et mention de la délivrance du brevet: **31.07.2024**
(21) Numéro de dépôt: 16713392.5
(22) Date de dépôt: 25.03.2016
(51) Int. Cl.: B05D 3/02, H05B 6/64, H05B 6/80

(54) **PROCÉDÉ DE TRAITEMENT THERMIQUE DE REVÊTEMENT DE SURFACE SUR UNE PIÈCE MÉTALLIQUE PAR MICRO-ONDES**
VERFAHREN ZUR WÄRMEBEHANDLUNG EINER OBERFLÄCHENBESCHICHTUNG AUF EINEM METALLTEIL DURCH MIKROWELLEN
METHOD FOR THERMAL TREATMENT OF A SURFACE COATING ON A METAL PART BY MICROWAVES

(30) Priorité: 27.03.2015 FR 1552629
(43) Date de publication de la demande: 31.01.2018
(73) Titulaire: Centre National de la Recherche Scientifique (CNRS), 75016 Paris (FR); Ecole Nationale Supérieure d'Ingénieurs de Caen, 14050 Caen Cedex 4 (FR)
(72) Inventeur: MARINEL, Sylvain, Mathieu 14920 (FR); SAVARY, Etienne, Caen 14000 (FR); THUAULT, Anthony, Valenciennes 59300 (FR); HEUGUET, Romain, Querqueville 50460 (FR)
(74) Mandataire: Hautier IP
(86) Numéro de dépôt international: PCT/EP2016/056737
(87) Numéro de publication internationale: WO 2016/156275

(56) Documents cités:
- EP-A1- 2 437 020
- WO-A1-89/11771
- DE-A1- 102006 010 220
- US-A- 4 307 277
- US-A1- 2005 221 017
- US-A1- 2006 201 935
- US-A1- 2009 079 101
- US-A1- 2010 025 395

## Description

L'invention concerne les dispositifs et les méthodes de traitement thermique de revêtement sur une pièce métallique.

Les pièces ou substrats métalliques nécessitent des traitements de surface pour de nombreuses applications industrielles. Les métaux peuvent par exemple être traités pour obtenir des propriétés antiadhésives (lors d'une interaction avec des aliments, par des fluoropolymères), pour être résistants à différents types de corrosions (moisissure, salinité, oxydation, etc.), pour obtenir des propriétés mécaniques spécifiques, comme la résistance à différents types d'abrasions, ou encore pour être lubrifiés et ainsi réduire les frottements lors de la réalisation de systèmes métalliques dynamiques. Le document US2005/221017 divulgue un dispositif de chauffage d'un revêtement d'une pièce métallique via une céramique sensible aux micro-ondes placées à côté de ce revêtement. Le document DE102206010220 divulgue un procédé de soudage par micro-ondes pour fabriquer un échangeur thermique.

La réalisation de ces traitements de surface nécessite souvent un traitement thermique du revêtement sur la pièce métallique. C'est par exemple le cas des revêtements en fluoropolymères, et des revêtements époxy. On peut aussi envisager de recouvrir une pièce métallique d'un oxyde, souvent stables chimiquement et possédant des propriétés électriques, mécaniques ou optiques spécifiques. Cette méthode requiert souvent un traitement thermique dont la température est très élevée.

Le traitement thermique des revêtements sur des pièces métalliques est réalisé dans l'art antérieur en chauffant la pièce par convection ou par induction. Dans le cas d'un chauffage par convection, un transfert thermique est établi entre une source de chaleur et l'échantillon à traiter au moyen d'une convection du milieu entourant l'échantillon. La source de chaleur est généralement une source émettant un rayonnement infrarouge, réalisée par exemple par un transducteur électrique, ou par la combustion d'un gaz. Dans le cas d'un chauffage par induction, des courants de Foucault chauffent la pièce métallique à traiter qui doit dans ce cas posséder préférentiellement des propriétés ferromagnétiques

Les fours à micro-ondes peuvent présenter une alternative intéressante à ces deux méthodes de traitement thermique. Pour chauffer des matériaux non métalliques, ils présentent un rendement énergétique bien supérieur à celui des deux méthodes décrites précédemment, pouvant conduire à une économie significative de l'énergie utilisée dans le cas de fours à convection. Ce rendement peut s'expliquer par une absorption de l'énergie localisée au sein de l'échantillon et par la réduction du volume total à chauffer.

Le chauffage d'un revêtement sur une pièce métallique massive et dense est, dans l'état de l'art, incompatible avec un chauffage micro-ondes. Dans un matériau, la longueur de pénétration d'un champ électromagnétique incident est inversement proportionnelle à la conductivité électrique du matériau. Ainsi, plus la conductivité électrique d'un matériau est élevée, plus il aura tendance à réfléchir des ondes électromagnétiques incidentes et en particulier des micro-ondes. Les métaux denses ont un comportement opaque et réfléchissant avec les micro-ondes, du fait de leur conductivité électrique élevée. Les réflexions du champ électromagnétique peuvent entraîner l'apparition d'un plasma lors d'un processus de chauffage d'un revêtement sur substrat métallique ou sur pièce métallique. Ces plasmas apparaissent lorsqu'assez d'énergie est apportée dans un gaz par exemple, en chauffant à haute température et en présentant un champ électromagnétique intense. Les formes d'une pièce métallique, telles que ses aspérités ou ses pointes (cas d'une pièce métallique de forme complexe) favorisent localement l'apparition d'un plasma.

L'apparition d'un plasma a un effet dramatique sur le traitement thermique d'un revêtement de surface. Les plasmas comportent des particules chargées libres en volume et donc très conductrices. Un plasma réfléchit aussi un champ électromagnétique incident. Ce plasma peut entraîner une perturbation majeure du chauffage jusqu'à provoquer une baisse rapide et significative de la température de l'échantillon.

Par ailleurs, les réflexions du champ électromagnétique sur des pièces métalliques denses et massives, dans des conditions de forte puissance d'émission micro-ondes, entraînent la formation potentielle d'un arc électrique dans une cavité micro-ondes. Cet effet est facilité par la présence d'aspérités et/ou de pointes sur le matériau massif. L'existence d'un tel arc peut être destructrice pour le dispositif de chauffage par micro-ondes.

L'invention vise à surmonter au moins l'un des inconvénients précités de l'art antérieur.

Un objet de l'invention permettant d'atteindre ce but est un procédé selon la revendication 1.

Avantageusement, lesdits matériau, agencement et dimensions desdits premiers suscepteurs écrantent partiellement desdites micro-ondes à la fréquence ν₀, au voisinage de chaque dite pièce métallique pendant la deuxième étape du procédé précédent.

Avantageusement, ledit agencement dudit ou desdits premiers suscepteurs forme un premier volume délimité par ledit ou lesdits premiers suscepteurs et dans lequel la moyenne de l'intensité du champ électromagnétique émis pendant la deuxième étape du procédé précédent, à l'intérieur dudit premier volume est:
- supérieure à 1%, préférentiellement à 2% et préférentiellement à 5% de la moyenne de l'intensité du champ électromagnétique à l'extérieur dudit premier volume dans ladite cavité;
- inférieure à 90% et préférentiellement à 80% de la moyenne de l'intensité du champ électromagnétique à l'extérieur dudit premier volume dans ladite cavité.

Avantageusement, ledit revêtement de surface présente une conductivité électrique inférieure à la conductivité électrique du matériau massif de chaque dite pièce métallique.

Le procédé selon l'invention est un procédé de calcination d'un dit revêtement, ou un procédé de réticulation d'un dit revêtement.

Avantageusement, le procédé précédent comprend également une étape consistant à mesurer, pendant au moins une partie de l'étape consistant à émettre les dites micro-ondes, la température dudit revêtement, puis à réguler la puissance d'émission desdites micro-ondes en fonction de ladite température mesurée.

Avantageusement, le procédé précédent comprend également une étape consistant à placer ledit ou lesdits premiers suscepteurs et ladite ou lesdites pièces métalliques dans un premier confinement thermique.

Avantageusement, le procédé précédent comprend également une étape consistant à entourer ledit premier confinement thermique par un ou une pluralité de seconds suscepteurs.

Avantageusement, ledit agencement dudit ou desdits seconds suscepteurs forme un second volume délimité par ledit ou lesdits seconds suscepteurs et dans lequel la moyenne de l'intensité du champ électromagnétique émis pendant la deuxième étape du procédé précédent, à l'intérieur dudit premier volume est:
- supérieure à 1%, préférentiellement à 2% et préférentiellement à 5% de la moyenne de l'intensité du champ électromagnétique à l'extérieur dudit second volume dans ladite cavité et
- inférieure à 90% et préférentiellement à 80% de la moyenne de l'intensité du champ électromagnétique à l'extérieur dudit second volume dans ladite cavité.

Avantageusement, le procédé précédent comprend également une étape consistant à placer ledit ou lesdits seconds suscepteurs et ledit premier confinement thermique dans un second confinement thermique.

Avantageusement, le procédé comprend une étape consistant à mettre un réceptacle en mouvement, ledit réceptacle étant agencé au moins en partie à l'intérieur dudit premier volume délimité par ledit ou lesdits premiers suscepteurs, de manière à agiter au moins une dite pièce métallique massive à l'intérieur d'un réceptacle.

Avantageusement, ledit réceptacle est un tambour apte à agiter au moins une dite pièce métallique massive par rotation.

Avantageusement, le procédé comprend une étape consistant à placer une pluralité de dites pièces métalliques massives au voisinage d'au moins un troisième suscepteur agencé à l'intérieur dudit premier volume délimité par ledit ou lesdits premiers suscepteurs.

Avantageusement, le matériau dudit ou desdits premiers ou seconds suscepteurs est choisi parmi un oxyde réfractaire et semi-conducteur d'un métal de transition, et un carbure.

Avantageusement, le matériau dudit ou desdits premiers ou seconds suscepteurs est choisi parmi du carbure de silicium et de la chromite de lanthane.

L'invention sera mieux comprise et d'autres avantages, détails et caractéristiques de celle-ci apparaîtront au cours de la description explicative qui suit, faite à titre d'exemple en référence aux dessins annexés dans lesquels :
- la figure 1 est une photographie illustrant un problème technique du traitement thermique par micro-ondes dans un cas différent de l'art antérieur;
- la figure 2 est une représentation schématique de la coupe d'un dispositif utilisé pour la réalisation du procédé de l'invention;
- la figure 3 est une représentation schématique d'une méthode de chauffage indirect différente de l'invention ;
- la figure 4 est une représentation schématique d'une méthode de chauffage direct différente de l'invention ;
- la figure 5 est une représentation schématique d'une méthode de chauffage hybride selon un mode de réalisation de l'invention ;
- la figure 6 illustre la cinétique de la température de la pièce métallique 4 lors d'un traitement thermique par micro-ondes selon la réalisation de l'invention décrite dans la figure 2 ;
- la figure 7 est une photographie d'un dispositif utilisé pour la mise en oeuvre d'un procédé selon l'invention ;
- la figure 8 est un ensemble de photographies d'un dispositif utilisé pour la mise en oeuvre d'un procédé selon l'invention.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés. Par souci de clarté, les mêmes éléments porteront les mêmes repères dans les différentes figures.

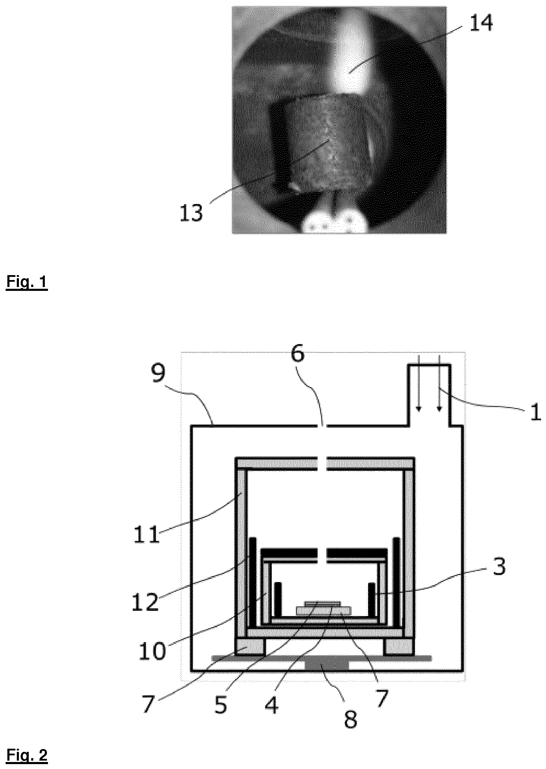

La figure 1 est une photographie illustrant un problème technique du traitement thermique par micro-ondes 1 dans un cas différent de l'art antérieur. Elle présente le traitement thermique d'un échantillon 13 en carbure de silicium (différent d'une pièce métallique massive 4) dans une cavité 9 dans laquelle des micro-ondes 1 sont émises, conduisant à une intensité du champ électromagnétique beaucoup plus élevée que dans les conditions de l'invention. Lors du traitement correspondant à la photographie, on observe la formation d'un plasma 14 sur un coin de l'échantillon 13.

Deux facteurs permettent principalement d'atteindre localement une quantité d'énergie favorable à l'initiation d'un plasma 14: la température et l'intensité du champ électromagnétique. Ces deux éléments sont favorisés lors du traitement photographié en figure 1 d'un échantillon 13. Les aspérités de l'échantillon 13, ou sa forme, peuvent favoriser des effets de pointes. En chauffant et en émettant des micro-ondes 1, on peut créer localement des plasmas 14 sur des aspérités ou des pointes. Ce problème technique est largement amplifié lors du traitement d'une pièce métallique massive 4: la pièce 4 réfléchit les micro-ondes 1 et favorise la création de maxima de densité d'énergie locaux, entraînant la création d'un plasma 14 et empêchant le traitement thermique des échantillons métalliques.

La figure 2 est une représentation schématique de la coupe d'un dispositif utilisé pour la réalisation du procédé de l'invention. Dans cette réalisation particulière de l'invention, la pièce métallique massive 4 possède un revêtement 5, déposé sur sa partie supérieure. La pièce métallique massive 4 est posée sur un support réalisé en isolant thermique 7. La pièce métallique 4 peut avoir des formes diverses : elle peut par exemple être un substrat cylindrique. La présence d'aspérités ou de pointes à sa surface est possible. Dans une réalisation particulière de l'invention, l'isolant thermique 7 peut être par exemple l'isolant thermique 7 liteCell (AET Technologies, isolant thermique à forte teneur en alumine).

La pièce métallique 4 est entourée d'un premier suscepteur 3, dont la coupe illustrant cette réalisation de l'invention fait apparaître deux tranches. Dans d'autres réalisations de l'invention, une pluralité de premiers suscepteurs 3 peuvent entourer la pièce métallique 4.

Les dimensions, le matériau et l'agencement du ou des premiers suscepteurs 3 sont choisis, ou configurés, pour écranter, au moins partiellement, les micro-ondes à la fréquence ν₀, au voisinage de chaque dite pièce métallique.

Par l'utilisation du terme « au voisinage », on entend une longueur, inférieure à la longueur caractéristique d'une ou d'une pluralité de pièces métalliques 4.

De manière générale, on considère par « micro-ondes » des ondes dont la fréquence est comprise entre 300 MHz et 300 GHz. En pratique, les micro-ondes seront avantageusement considérées comme des ondes dont la fréquence est comprise entre 900 MHz et 6 GHz.

Un suscepteur est un matériau capable d'une excellente absorption du rayonnement des micro-ondes 1 à une fréquence donnée. Lors de l'absorption de ce rayonnement, le matériau suscepteur peut réémettre l'énergie absorbée par rayonnement infrarouge 2 par exemple. L'absorption d'un matériau suscepteur est gouvernée par des pertes diélectriques, électriques ou magnétiques élevées lors de l'excitation du matériau par un champ électromagnétique, comme par exemple dans le cas des micro-ondes 1. Les matériaux utilisés comme suscepteurs dans les réalisations de l'invention peuvent être du carbure de silicium (SiC), du chromite de lanthane (LaCrO₃). D'autres matériaux à fortes capacités d'absorption des micro-ondes 1 peuvent être utilisés. On peut utiliser des matériaux comportant un oxyde réfractaire et semi-conducteur d'un métal de transition. On peut aussi utiliser les matériaux composés de carbures, comme le carbure de bore par exemple.

L'absorption locale des micro-ondes 1 permet, selon l'agencement des différents suscepteurs, de configurer un volume dans lequel le champ électromagnétique est écranté.

Dans cette réalisation de l'invention, l'ensemble formé par la pièce métallique 4 et son revêtement 5, le support en isolant thermique 7 et le premier suscepteur 3 entourant la pièce métallique 4, est entouré d'une paroi d'un premier confinement thermique 10 réalisé en isolant thermique 7. Dans une réalisation particulière de l'invention, l'isolant thermique 7 peut être par exemple l'isolant thermique 7 litecell (AET Technologies S.A.S., isolant thermique à forte teneur en alumine). Ce confinement par un isolant thermique 7 permet de limiter les pertes d'énergie par radiation pendant le traitement thermique.

Dans la réalisation de l'invention présentée dans la figure 2, un ou une pluralité de seconds suscepteurs 12 sont placés autour du premier confinement thermique 10. L'ensemble composé des seconds suscepteurs 12 et du premier confinement thermique 10 est entouré par un second confinement thermique 11, réalisé en isolant thermique 7. Cette structure permet d'augmenter à la fois les propriétés de confinement thermique et de réduction locale du champ électromagnétique. Dans cette réalisation particulière de l'invention, le second confinement thermique 11 est réalisé par un isolant thermique 7 de type Quartzel (marque déposée, Saint-Gobain Quartz S.A.S.).

Dans la réalisation particulière présentée en figure 2, le second confinement thermique 11 est posé sur un plateau en aluminium.

L'ensemble des éléments décrits dans la figure 2 est placé dans une cavité 9. Des micro-ondes 1 sont émises dans une entrée de la cavité 9 par un émetteur. Dans une réalisation particulière de l'invention, l'émetteur de micro-ondes 1 peut être un magnétron. Dans une réalisation particulière de l'invention, les micro-ondes 1 sont émises à la fréquence ν₀ = 2,45 GHz.

La cavité 9, le premier confinement thermique 10, le second confinement thermique 11 et le second suscepteur 12 peuvent être percés afin de réaliser une visée pyrométrique 6. Cette visée 6 peut permettre à un capteur de température de mesurer à distance la température d'une pièce métallique 4 ou d'un revêtement 5 pendant un traitement thermique. Dans une réalisation particulière de l'invention, le capteur de température et l'émetteur de micro-ondes 1 sont reliés par l'intermédiaire d'un bus à une unité de traitement. L'unité de traitement comporte un ou plusieurs microprocesseurs et une mémoire. L'unité de traitement permet de contrôler de manière indépendante la puissance d'émission de l'émetteur micro-onde et de traiter les informations du capteur de température. Dans des réalisations particulières de l'invention, on asservit la puissance à une consigne de température donnée. La consigne de température peut être variable dans le temps de manière à réaliser des profils de traitement en température définis, comme des rampes de températures ou des traitements thermiques à température stationnaire.

Lors de la réalisation du procédé de l'invention, la géométrie, l'agencement et les matériaux des premiers suscepteurs 3 entourant la pièce métallique massive 4 et permettant son écrantage, ont été trouvés par essais, successifs et itératifs. Ils peuvent également être approximés par une modélisation numérique utilisant la méthode des éléments finis.

Dans une réalisation particulière de l'invention, l'écrantage d'une pièce métallique 4 peut être partiel. L'utilité d'un écrantage partiel d'une pièce métallique 4 est expliquée dans la description des figures suivantes. Dans des réalisations particulières de l'invention, l'agencement du ou des premiers suscepteurs 3 forme un volume délimité par le ou les premiers suscepteurs 3. La moyenne de l'intensité du champ électromagnétique lors de l'émission de micro-ondes 1 à l'intérieur du volume peut être :
- supérieure à 1%, préférentiellement à 2% et préférentiellement à 5% de la moyenne de l'intensité du champ électromagnétique à l'extérieur dudit volume dans la cavité 9 et
- inférieure à 90% et préférentiellement à 80% de la moyenne de l'intensité du champ électromagnétique à l'extérieur du volume dans la cavité 9.

Dans une autre réalisation particulière de l'invention, l'écrantage partiel d'une pièce métallique 4 peut être réalisé par l'effet conjoint du ou des premiers suscepteurs 3 et du ou des seconds suscepteurs 12. Dans cette réalisation, l'agencement du ou des seconds suscepteurs 12 forme un volume délimité par le ou les seconds suscepteurs 12. La moyenne de l'intensité du champ électromagnétique lors de l'émission de micro-ondes 1 à l'intérieur du volume délimité précédemment par le ou les premier suscepteurs 3 peut être :
- supérieure à 1%, préférentiellement à 2% et préférentiellement à 5% de la moyenne de l'intensité du champ électromagnétique à l'extérieur du volume délimité par le ou les seconds suscepteurs 12 dans la cavité 9 et
- inférieure à 90% et préférentiellement à 80% de la moyenne de l'intensité du champ électromagnétique à l'extérieur du volume délimité par le ou les seconds suscepteurs 12 dans la cavité 9.

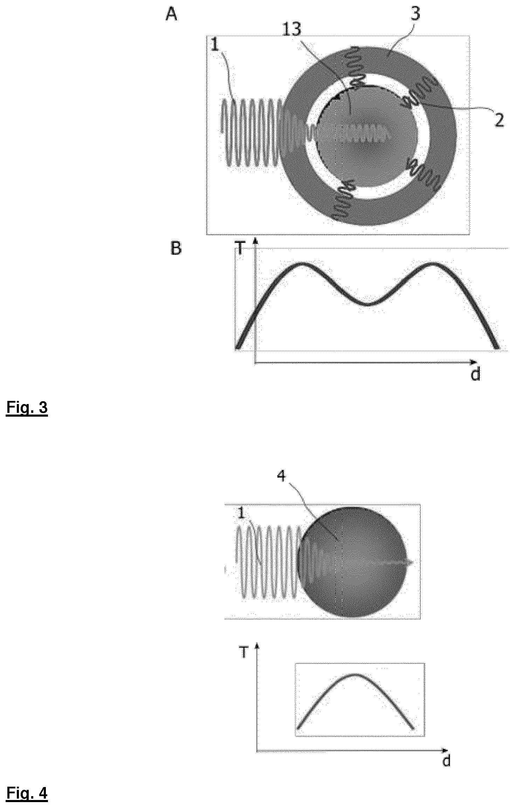

La figure 3 est une représentation schématique d'une méthode de chauffage indirect, différente de l'invention. Le panneau A de la figure 3 est une représentation schématique en vue de dessus de la mise en oeuvre d'un chauffage indirect.

La mise en oeuvre du chauffage indirect comporte l'utilisation d'un premier suscepteur 3 et d'un échantillon 13 entouré par le premier suscepteur 3. Dans le cas du chauffage indirect, le matériau constituant l'échantillon 13 à chauffer est transparent aux micro-ondes 1 ou opaque aux micro-ondes 1.

Par « transparent », on définit un matériau dont les pertes diélectriques et/ou magnétiques sont sensiblement nulles lorsque le matériau est soumis à un champ micro-ondes 1 à une fréquence donnée. Un matériau transparent possède généralement une conductivité électrique très faible. La conductivité électrique d'un matériau transparent peut être inférieure à 10⁻⁸ S.m⁻¹, préférentiellement inférieure à 10⁻¹⁰ S.m⁻¹ et plus préférentiellement inférieure à 10⁻¹² S.m⁻¹.

Par « opaque », on définit un matériau réfléchissant le rayonnement des micro-ondes 1 pour une fréquence donnée. Un matériau opaque possède en général une conductivité électrique élevée. La conductivité électrique d'un matériau opaque est préférentiellement supérieure à 10³ S.m⁻¹. Dans cette mise en oeuvre différente de celle de l'invention, l'interaction entre les micro-ondes 1 et l'échantillon 13 ne permet pas une croissance de la température de l'échantillon 13. En revanche, le suscepteur 3 placé autour de l'échantillon 13 absorbe les micro-ondes 1 et émet un rayonnement infrarouge 2. L'échantillon peut alors être chauffé par un rayonnement infrarouge 2.

Le panneau B de la figure 3 illustre schématiquement un profil de température suivant un axe passant par le centre de l'échantillon 13. Les deux maxima de température de cette mise en oeuvre se situent à la distance, correspondant à l'axe d en abscisse, de l'emplacement du premier suscepteur 3. La température au centre de l'échantillon est due à un chauffage par rayonnement infrarouge 2 de la périphérie de l'échantillon couplé à une conduction thermique au sein de l'échantillon comme expliqué précédemment.

Cette mise en oeuvre ne permet par de résoudre le problème technique posé par l'art antérieur. D'une part, l'échantillon 13 est chauffé à partir du rayonnement infrarouge 2 du premier suscepteur 3 : il est alors par exemple impossible de chauffer sélectivement un revêtement 5 de surface à une température sensiblement supérieure à celle de la pièce métallique 4. D'autre part, cette réalisation permet un chauffage indirect de l'échantillon. Lors de cette réalisation, on perd une partie significative du rendement énergétique liée au chauffage par micro-ondes 1.

La figure 4 est une représentation schématique d'une méthode de chauffage direct différente de l'invention. Le panneau A de la figure 3 est une représentation schématique en vue de dessus de la mise en oeuvre d'un chauffage direct. Dans le cas du chauffage direct, le matériau constituant l'échantillon 13 à chauffer absorbe les micro-ondes 1 à une fréquence donnée. L'interaction entre les micro-ondes 1 et le matériau absorbant de l'échantillon 13 permet de chauffer l'échantillon.

Le panneau B de la figure 4 illustre schématiquement un profil de température suivant un axe passant par le centre de l'échantillon 13. Dans cette mise en oeuvre, différente de l'invention, le profil de température présente un maximum au centre de l'échantillon. Le profil peut être différent car il dépend notamment de la taille de l'échantillon 13, du matériau de l'échantillon 13, de la puissance et de la longueur d'onde des micro-ondes 1 émises.

Cette mise en oeuvre ne permet par de résoudre le problème technique posé par l'art antérieur. Dans le cas d'un échantillon 13 comportant une pièce métallique massive 4 et son revêtement de surface 5, la puissance des micro-ondes 1 émises nécessaire au traitement thermique du revêtement 5 de surface peut entraîner l'apparition d'un plasma 14 au voisinage de l'échantillon 13 et/ou d'un arc électrique dans la cavité 9.

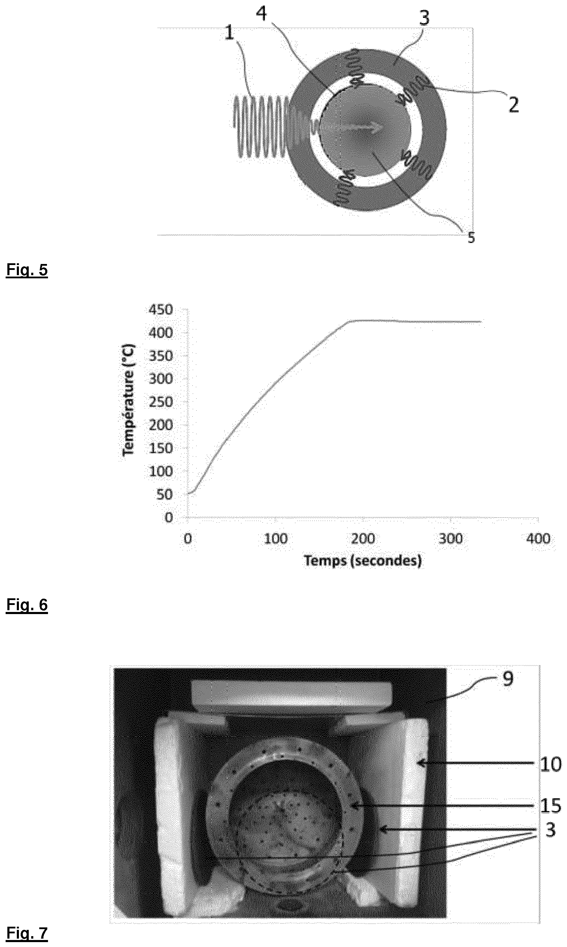

La figure 5 est une représentation schématique d'une méthode de chauffage hybride selon un mode de réalisation de l'invention. Le panneau A de la figure 4 est une représentation schématique en vue de dessus de la mise en oeuvre d'un chauffage hybride. La mise en oeuvre de cette réalisation de l'invention comporte un échantillon 13 comprenant une pièce métallique 4, non visible en vue de dessus dans la figure 5, couverte par un revêtement de surface 5. L'échantillon est entouré par un premier suscepteur 3. Dans cette réalisation de l'invention, le suscepteur 3 absorbe à une fréquence donnée les micro-ondes 1. Le champ micro-onde 1 au voisinage de l'échantillon 13 peut alors être écranté partiellement. Le suscepteur émet dans ce cas un rayonnement infrarouge 2 qui contribue au traitement en température du revêtement 5. En outre, la partie des micro-ondes 1 qui n'est pas écrantée au voisinage de l'échantillon 13 peut être absorbée, à une fréquence donnée, par le revêtement 5. Cette partie des micro-ondes 1 n'est en revanche pas absorbée par la pièce 4. En effet, le caractère métallique de la pièce la rend opaque au rayonnement micro-ondes 1. Cette méthode hybride permet de chauffer le revêtement par la contribution du rayonnement infrarouge et par la contribution du rayonnement micro-ondes 1, sans entraîner la formation d'un plasma 14 au voisinage de la pièce métallique 4.

La figure 6 illustre la cinétique de la température de la pièce métallique 4 lors d'un traitement thermique par micro-ondes 1 selon la réalisation de l'invention décrite dans la figure 2. La mesure de la température de la figure 6 est réalisée par un capteur de température infrarouge utilisant la visée pyrométrique 6 pour capter le spectre infrarouge du revêtement 5. Le traitement thermique est réalisé en deux phases. Lors de la première phase, on impose une puissance constante d'émission micro-ondes 1 (dans cette réalisation particulière de l'invention, la puissance de l'émetteur micro-ondes 1, lors de la première phase, est de 6000 W). La température de l'échantillon croît jusqu'à une valeur consigne de 425 °C en moins de 3 minutes. Dans une approximation linéaire de la croissance de température de l'échantillon lors de cette première phase, la pente de la cinétique est d'environ 130°C.min⁻¹. Lors de la seconde phase, la puissance est ajustée par l'unité de traitement pour maintenir une température de 425°C constante (palier de température). Cette température est maintenue pendant 2 minutes et 30 secondes. La cinétique ne comporte pas de rampe de descente en température car la pièce métallique 4 a été retirée du four micro-ondes 1, dès la deuxième phase terminée. En effet, dès la fin du palier, la puissance micro-ondes 1 est arrêtée, permettant ainsi l'ouverture de la cavité 9.

La figure 7 est une photographie d'un dispositif utilisé pour la mise en oeuvre d'un procédé selon l'invention. Le dispositif utilisé comporte un réceptacle 15 apte à contenir une ou des pièces métalliques massives 4. Le réceptacle 15 est placé, au moins en partie, à l'intérieur du premier volume délimité par ledit ou lesdits premiers suscepteurs 3. Dans l'exemple illustré en figure 7, le réceptacle 15 est un tambour, en métal percé, entouré de plusieurs premiers suscepteurs 3. La photographie de la figure 7 présente un dispositif dont on a enlevé un premier suscepteur 3 (symbolisé par des pointillés noirs) et une paroi d'un premier confinement thermique 10 pour la clarté de l'illustration.

Le réceptacle 15 peut être mis en mouvement dans un mode de réalisation du procédé selon l'invention, par exemple au moyen d'un moteur placé à l'intérieur ou à l'extérieur de la cavité 9. Cette mise en mouvement du réceptacle 15 est réalisée de manière à agiter au moins une pièce métallique massive 4, placée à l'intérieur du réceptacle 15 lors du procédé. L'agitation de la ou des pièces métalliques massives 4 permet de changer l'agencement des dites pièces 4 par rapport au champ micro-ondes et/ou à la distribution de température dans le réceptacle 15. Si le champ micro-ondes et/ou la distribution spatiale de température n'est pas homogène, cette agitation peut permettre un traitement plus homogène des différentes pièces métalliques massives 4 et/ou du revêtement des différentes pièces métalliques massives 4.

Le réceptacle 15 peut être un tambour métallique, comme illustré dans la figure 7. Dans cet exemple, le tambour est réalisé en acier et percé. Un dégagement gazeux peut être entraîné par le traitement thermique de la ou des pièces métalliques massives 4: les trous permettent à ce dégagement d'être convecté dans la cavité 9 sans être confiné dans le réceptacle 15.

Le tambour peut réaliser une rotation sur lui-même pour agiter la ou les pièces métalliques massives 4 qu'il contient. La rotation peut être réalisée selon un axe de symétrie du tambour.

L'agitation des différentes pièces métalliques massives 4 peut être réalisée pendant l'émission des micro-ondes ou bien entre des étapes d'émission de micro-ondes. Une succession des étapes d'émission des micro-ondes et de mise en mouvement du réceptacle 15 peut être avantageuse : l'agitation et la mise en contact de plusieurs pièces métalliques massives 4 pendant l'émission de micro-ondes peut entraîner la création d'arcs électriques entre certaines pièces 4. Cet effet peut être évité en agitant les pièces 4 pendant un arrêt de l'émission de micro-ondes. L'étape de mise en mouvement du réceptacle 15 peut durer quelques secondes. Cette durée est petite devant la durée d'un traitement thermique typique (typiquement supérieur à 100 secondes) et ne perturbe que faiblement le traitement thermique des pièces 4.

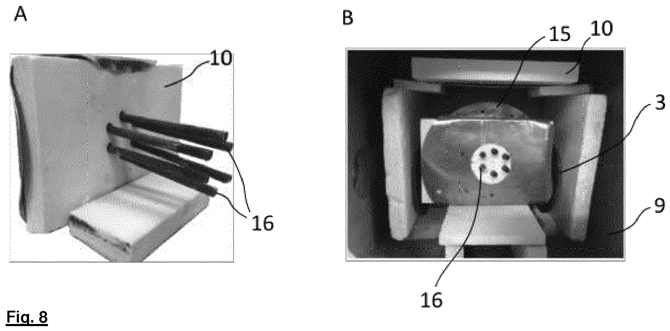

La figure 8 est un ensemble de photographies d'un dispositif utilisé pour la mise en oeuvre d'un procédé selon l'invention. Le panneau A de la figure 8 est une photographie illustrant un ensemble de troisièmes suscepteurs 16 liés de manière solidaire à la paroi d'un premier confinement thermique 10. Le panneau B de la figure 8 est une photographie illustrant un dispositif adapté à la mise en oeuvre d'un procédé selon l'invention, comportant une pluralité de troisièmes suscepteurs 16 agencée dans le premier volume délimité par les premiers suscepteurs 3. Les parties visibles des troisièmes suscepteurs 16 dans le panneau A de la figure 8, sont, pendant la réalisation du procédé, insérées dans le volume du réceptacle 15, comme illustré par le panneau B de la figure 8. De manière plus générale, une pluralité de pièces métalliques massives 4 est placée au voisinage d'au moins un troisième suscepteur 16. Ces pièces 4 peuvent être disposées aussi bien sur un support que dans un réceptacle 15 mobile. Les inventeurs ont découvert que cette configuration entraîne une cinétique de la température du revêtement des pièces 4 plus rapide. Dans la configuration du dispositif illustré dans le panneau B de la figure 8, six barreaux en carbure de silicium correspondent aux troisièmes suscepteurs 16. Pendant le procédé, les pièces métalliques 4 peuvent être disposées entre ou autours de ces barreaux. Le nombre et la disposition des troisièmes suscepteurs 16 n'écrantent pas totalement le champ micro-ondes : le traitement thermique du revêtement des pièces métalliques massives 4 résulte d'une combinaison entre l'absorption des micro-ondes par le ou les revêtements et l'échange thermique des suscepteurs vers le ou les revêtements.

## Revendications

1. Procédé de traitement d'un revêtement de surface (5) d'une pièce métallique massive (4), comprenant les étapes consistant à :
• placer dans une cavité micro-ondes (9) au moins une dite pièce métallique (4) comportant un dit revêtement de surface (5) pouvant absorber des micro-ondes (1) à la fréquence ν₀, entourée d'un ou d'une pluralité de premiers suscepteurs (3) dont les dimensions, le matériau et l'agencement sont configurés pour écranter desdites micro-ondes (1) à la fréquence ν₀, au voisinage de chaque dite pièce métallique (4) ;
• émettre desdites micro-ondes à la fréquence ν₀ dans ladite cavité micro-ondes ;
dans lequel le procédé de traitement du revêtement (5) est un procédé de calcination ou dans lequel le procédé de traitement du revêtement (5) est un procédé de réticulation.

2. Procédé selon la revendication précédente dans lequel lesdits matériaux, agencement et dimensions desdits premiers suscepteurs (3) écrantent partiellement desdites micro-ondes (1) à la fréquence ν₀, au voisinage de chaque dite pièce métallique (4) pendant la deuxième étape de la revendication précédente.

3. Procédé selon la revendication précédente dans lequel ledit agencement dudit ou desdits premiers suscepteurs (3) forme un premier volume délimité par ledit ou lesdits premiers suscepteurs (3) et dans lequel la moyenne de l'intensité du champ électromagnétique émis pendant la deuxième étape de la revendication 1, à l'intérieur dudit premier volume est:
• supérieure à 1 %, préférentiellement à 2% et préférentiellement à 5% de la moyenne de l'intensité du champ électromagnétique à l'extérieur dudit premier volume dans ladite cavité micro-ondes (9) et
• inférieure à 90% et préférentiellement à 80% de la moyenne de l'intensité du champ électromagnétique à l'extérieur dudit premier volume dans ladite cavité micro-ondes (9).

4. Procédé selon les revendications précédentes dans lequel ledit revêtement de surface (5) présente une conductivité électrique inférieure à la conductivité électrique du matériau massif de chaque dite pièce métallique (4).

5. Procédé selon l'une des revendications précédentes comportant également une étape consistant à mesurer, pendant au moins une partie de l'étape consistant à émettre les dites micro-ondes (1), la température dudit revêtement (5), puis à réguler la puissance d'émission desdites micro-ondes (1) en fonction de ladite température mesurée.

6. Procédé selon l'une des revendications précédentes, comprenant une étape consistant à placer ledit ou lesdits premiers suscepteurs (3) et ladite ou lesdites pièces métalliques (4) dans un premier confinement thermique (10).

7. Procédé selon la revendication 6, comprenant une étape consistant à entourer ledit premier confinement thermique (10) par un ou une pluralité de seconds suscepteurs (12).

8. Procédé selon la revendication 7 dans lequel ledit agencement dudit ou desdits seconds suscepteurs (12) forme un second volume délimité par ledit ou lesdits seconds suscepteurs (12) et dans lequel la moyenne de l'intensité du champ électromagnétique émis pendant la deuxième étape de la revendication 1, à l'intérieur dudit premier volume est:
• supérieure à 1%, préférentiellement à 2% et préférentiellement à 5% de la moyenne de l'intensité du champ électromagnétique à l'extérieur dudit second volume dans ladite cavité micro-ondes (9) et
• inférieure à 90% et préférentiellement à 80% de la moyenne de l'intensité du champ électromagnétique à l'extérieur dudit second volume dans ladite cavité micro-ondes (9).

9. Procédé selon la revendication 7 à 8, comprenant une étape consistant à placer ledit ou lesdits seconds suscepteurs (12) et ledit premier confinement thermique (10) dans un second confinement thermique (11).

10. Procédé selon l'une des revendications précédentes comprenant une étape consistant à mettre un réceptacle (15) en mouvement, ledit réceptacle étant agencé au moins en partie à l'intérieur dudit premier volume délimité par ledit ou lesdits premiers suscepteurs (3), de manière à agiter au moins une dite pièce métallique massive (4) à l'intérieur d'un réceptacle (15).

11. Procédé selon la revendication 10 dans lequel ledit réceptacle (15) est un tambour apte à agiter au moins une dite pièce métallique massive (4) par rotation.

12. Procédé selon l'une des revendications précédentes comportant une étape consistant à placer une pluralité de dites pièces métalliques massives (4) au voisinage d'au moins un troisième suscepteur (16) agencé à l'intérieur dudit premier volume délimité par ledit ou lesdits premiers suscepteurs (3).

13. Procédé selon l'une des revendications 1 à 12 dans lequel le matériau dudit ou desdits premiers, seconds ou troisièmes suscepteurs (3,12) est choisi parmi un oxyde réfractaire et semi-conducteur d'un métal de transition, et un carbure.

14. Procédé selon l'une des revendications 1 à 12 dans lequel le matériau dudit ou desdits premiers, seconds ou troisièmes suscepteurs (3,12) est choisi parmi du carbure de silicium et de la chromite de lanthane.

## Patentansprüche

1. Verfahren zum Behandeln einer Oberflächenbeschichtung (5) eines massiven Metallwerkstücks (4), umfassend die Schritte, die aus Folgendem bestehen:
• Platzieren von mindestens einem Metallwerkstück (4), das eine Oberflächenbeschichtung (5) umfasst, die Mikrowellen (1) mit der Frequenz *v*₀ absorbieren kann, in einem Mikrowellenhohlraum (9), der von einem oder einer Vielzahl von ersten Suszeptoren (3) umgeben ist, deren Abmessungen, Material und Anordnung dazu konfiguriert sind, die Mikrowellen (1) mit der Frequenz *v*₀ in der Nähe jedes Metallwerkstücks (4) abzuschirmen;
• Emittieren der Mikrowellen mit der Frequenz *v*₀ in den Mikrowellenhohlraum;
wobei das Behandlungsverfahren für die Beschichtung (5) ein Kalzinierungsverfahren ist oder wobei das Behandlungsverfahren für die Beschichtung (5) ein Vernetzungsverfahren ist.

2. Verfahren nach dem vorhergehenden Anspruch, wobei die Materialien, Anordnung und Abmessungen der ersten Suszeptoren (3) während des zweiten Schritts des vorhergehenden Anspruchs die Mikrowellen (1) mit der Frequenz *v*₀ in der Nähe jedes Metallwerkstücks (4) teilweise abschirmen.

3. Verfahren nach dem vorhergehenden Anspruch, wobei die Anordnung des oder der ersten Suszeptoren (3) ein erstes Volumen bildet, das durch den oder die ersten Suszeptoren (3) begrenzt wird, und wobei die durchschnittliche Intensität des elektromagnetischen Felds, das während des zweiten Schritts von Anspruch 1 emittiert wird, im Inneren des ersten Volumens wie folgt ist:
• höher als 1 %, vorzugsweise als 2 % und vorzugsweise als 5 % der durchschnittlichen Intensität des elektromagnetischen Felds außerhalb des ersten Volumens in dem Mikrowellenhohlraum (9) und
• niedriger als 90 % und vorzugsweise als 80 % der durchschnittlichen Intensität des elektromagnetischen Felds außerhalb des ersten Volumens in dem Mikrowellenhohlraum (9).

4. Verfahren nach den vorhergehenden Ansprüchen, wobei die Oberflächenbeschichtung (5) eine elektrische Leitfähigkeit aufweist, die niedriger ist als die elektrische Leitfähigkeit des massiven Materials jedes Metallwerkstücks (4).

5. Verfahren nach einem der vorhergehenden Ansprüche, das außerdem einen Schritt umfasst, der darin besteht, die Temperatur der Beschichtung (5) während mindestens eines Teils des Schritts, der darin besteht, die Mikrowellen (1) zu emittieren, zu messen und dann die Emissionsleistung der Mikrowellen (1) in Abhängigkeit von der gemessenen Temperatur zu regulieren.

6. Verfahren nach einem der vorhergehenden Ansprüche, das einen Schritt umfasst, der darin besteht, den oder die ersten Suszeptoren (3) und das oder die Metallwerkstücke (4) in einer ersten thermischen Aufnahmevorrichtung (10) zu platzieren.

7. Verfahren nach Anspruch 6, das einen Schritt umfasst, der darin besteht, die erste thermische Aufnahmevorrichtung (10) mit einem oder einer Vielzahl von zweiten Suszeptoren (12) zu umgeben.

8. Verfahren nach Anspruch 7, wobei die Anordnung des oder der zweiten Suszeptoren (12) ein zweites Volumen bildet, das durch den oder die zweiten Suszeptoren (12) begrenzt wird, und wobei die durchschnittliche Intensität des elektromagnetischen Felds, das während des zweiten Schritts von Anspruch 1 emittiert wird, im Inneren des ersten Volumens wie folgt ist:
• höher als 1 %, vorzugsweise als 2 % und vorzugsweise als 5 % der durchschnittlichen Intensität des elektromagnetischen Felds außerhalb des zweiten Volumens in dem Mikrowellenhohlraum (9) und
• niedriger als 90 % und vorzugsweise als 80 % der durchschnittlichen Intensität des elektromagnetischen Felds außerhalb des zweiten Volumens in dem Mikrowellenhohlraum (9).

9. Verfahren nach Anspruch 7 bis 8, das einen Schritt umfasst, der darin besteht, den oder die zweiten Suszeptoren (12) und die erste thermische Aufnahmevorrichtung (10) in einer zweiten thermischen Aufnahmevorrichtung (11) zu platzieren.

10. Verfahren nach einem der vorhergehenden Ansprüche, das einen Schritt umfasst, der darin besteht, einen Behälter (15) in Bewegung zu versetzen, wobei der Behälter mindestens teilweise im Inneren des ersten Volumens angeordnet ist, das von dem oder den ersten Suszeptoren (3) begrenzt wird, um mindestens ein massives Metallwerkstück (4) im Inneren eines Behälters (15) zu bewegen.

11. Verfahren nach Anspruch 10, wobei der Behälter (15) eine Trommel ist, die dazu ausgelegt ist, mindestens ein massives Metallwerkstück (4) durch Drehung zu bewegen.

12. Verfahren nach einem der vorhergehenden Ansprüche, das einen Schritt umfasst, der darin besteht, eine Vielzahl der massiven Metallwerkstücke (4) in der Nähe von mindestens einem dritten Suszeptor (16) zu platzieren, der im Inneren des ersten Volumens angeordnet ist, das von dem oder den ersten Suszeptoren (3) begrenzt wird.

13. Verfahren nach einem der Ansprüche 1 bis 12, wobei das Material des oder der ersten, zweiten oder dritten Suszeptoren (3, 12) aus einem feuerfesten und halbleitenden Oxid eines Übergangsmetalls und einem Karbid ausgewählt wird.

14. Verfahren nach einem der Ansprüche 1 bis 12, wobei das Material des oder der ersten, zweiten oder dritten Suszeptoren (3, 12) aus Siliziumkarbid und Lanthanchromit ausgewählt wird.

## Claims

1. A method for treating a surface coating (5) of a bulk metal part (4), comprising the steps consisting in:
• placing, in a microwave cavity (9), at least one said metal part (4) including said surface coating (5) capable of absorbing microwaves (1) at the frequency v₀, surrounded by one or more first susceptors (3) the dimensions, the material and the arrangement of which are configured to screen said microwaves (1) at the frequency v₀, in the vicinity of each said metal part (4);
• emitting said microwaves at the frequency v₀ into said microwave cavity; wherein the method for treating the coating (5) is a calcination process or wherein the method for treating the coating (5) is a crosslinking process.

2. The method according to the preceding claim, wherein said material, arrangement and dimensions of said first susceptors (3) partially screen said microwaves (1) at the frequency v₀, in the vicinity of each said metal part (4), during the second step of the preceding claim.

3. The method according to the preceding claim, wherein said arrangement of said first susceptor(s) (3) forms a first volume delimited by said first susceptor(s) (3) and wherein the average of the intensity of the electromagnetic field emitted during the second step of claim 1, inside said first volume is:
• higher than 1%, preferably 2% and preferably 5%, of the average of the intensity of the electromagnetic field outside said first volume in said microwave cavity (9), and
• lower than 90%, and preferably 80%, of the average of the intensity of the electromagnetic field outside said first volume in said microwave cavity (9).

4. The method according to the preceding claims, wherein said surface coating (5) has an electrical conductivity lower than the electrical conductivity of the bulk material of each said metal part (4).

5. The method according to one of the preceding claims, also including a step consisting in measuring, during at least part of the step consisting in emitting said microwaves (1), the temperature of said coating (5), then regulating the emission power of said microwaves (1) according to said measured temperature.

6. The method according to one of the preceding claims, comprising a step consisting in placing said first susceptor(s) (3) and said metal part(s) (4) in a first thermal confinement (10).

7. The method according to claim 6, comprising a step consisting in surrounding said first thermal confinement (10) with one or more second susceptor(s) (12).

8. The method according to claim 7, wherein said arrangement of said second susceptor(s) (12) forms a second volume delimited by said second susceptor(s) (12) and wherein the average of the intensity of the electromagnetic field emitted during the second step of claim 1, inside said first volume is:
• higher than 1%, preferably 2% and preferably 5%, of the average of the intensity of the electromagnetic field outside said second volume in said microwave cavity (9), and
• lower than 90%, and preferably 80%, of the average of the intensity of the electromagnetic field outside said second volume in said microwave cavity (9).

9. The method according to claim 7 to 8, comprising a step consisting in placing said second susceptor(s) (12) and said first thermal confinement (10) in a second thermal confinement (11).

10. The method according to one of the preceding claims, comprising a step consisting in setting a receptacle (15) into motion, said receptacle being arranged at least partially inside said first volume delimited by said first susceptor(s) (3), so as to agitate at least one said bulk metal part (4) inside a receptacle (15).

11. The method according to claim 10, wherein said receptacle (15) is a drum able to agitate at least one said bulk metal part (4) by rotation.

12. The method according to one of the preceding claims, including a step consisting in placing a plurality of said bulk metal parts (4) in the vicinity of at least one third susceptor (16) arranged inside said first volume delimited by said first susceptor(s) (3).

13. The method according to one of claims 1 to 12, wherein the material of said first, second or third susceptor(s) (3, 12) is selected from among a refractory and semiconductor oxide of a transition metal, and a carbide.

14. The method according to one of claims 1 to 12, wherein the material of said first, second or third susceptor(s) (3, 12) is selected from among silicon carbide and lanthanum chromite.
